# EUROPEAN PATENT SPECIFICATION

(11) **EP 0 493 852 B1**
(45) Date of publication and mention of the grant of the patent: **11.09.1996**
(21) Application number: 91203321.4
(22) Date of filing: 17.12.1991
(51) Int. Cl.: A22C 21/00

(54) **Automatic machine and continuous thread system for tying poultry products**
System und Maschine zum Zusammenbinden von Geflügelprodukten
Système et machine à brider des produits de volailles

(30) Priority: 24.12.1990 IT 171290
(43) Date of publication of application: 08.07.1992
(73) Proprietor: Mignone, Giuseppe, I-14010 Cisterna d'Asti, Asti (IT)
(72) Inventor: Mignone, Giuseppe, I-14010 Cisterna d'Asti, Asti (IT)
(74) Representative: Riccardi, Sergio

(56) References cited:
- EP-A- 0 413 629
- FR-A- 2 522 475
- US-A- 2 842 443
- US-A- 3 474 489
- US-A- 3 509 594

## Description

The present invention regards an automatic machine and system for tying poultry products such as chickens in a figure of eight with one or more twists, in order to tie the legs and coccyx of chickens, suitable for large production.

Currently several million chickens are prepared for various markets, for example in France alone there are about 30/40 million birds per year, which are tied by hand at high cost.

Currently on the market there is a machine of Dutch origin for turning in the thighs of chickens: The function of this machine is as follows: The cleaned chicken, by means of a chain, is delivered to the operator who positions it on the thigh turning in machine, which utilises part of the chicken skin covering the breast, detaches it and threads the legs under it, so holding them fairly neatly.

The packaging speed is not high, it does not exceed 16 chickens per minute.

The disadvantage with this machine is that the partial detachment of the skin from the chicken favours the introduction of bacteria into the chicken itself and therefore its conservation is reduced.

In fact the skin, it is known, is a optimal barrier against bacteria and, the less it is damaged the better.

From document FR-A-2 522 475 it is known another machine for tying chickens. This machine is substantially formed by a chain belt, on the upper strap of the chain belt there are plates carrying chickens. Every chicken is stopped on its plate by means of two supports retractable under the chain. At the end of and over the chain belt there is a device for tying the chicken.

However, this machine due to its peculiar structure is cumbersome so that it cannot be used in a small facility. Moreover, the device realizes the tying of the chicken by means of a loop because it is not able to carry out a knot. Then, the presence of the retractable supports makes the machine mechanically complex.

Document EP-A-0 413 629 describes another apparatus that keeps a chicken in a vertical position while the same is tyed. However, also this apparatus carry out the tying of the chicken by means of a loop since it is not able to carry out a knot. Moreover, the same apparatus is very complex as it has to work perfectly synchronized with the overhead transportation chain from which the chicken are not removed during the tying operation.

The object of the present invention is that of realising a system for tying in a figure of eight, with a continuous thread of natural, artificial or synthetic rubber, covered spirally with several layers of natural, synthetic or artificial cord, which does not have said disadvantages, and makes the chicken compact and ready to be introduced on the spit. This problem is resolved with a machine having the characteristics indicated in claim 1. Advantageous embodiments of the machine are further indicated in the dependent claims.

The continuous thread machine according to the present invention has the merit of tying legs, wings and coccyx contemporaneously rendering it compact and ready to be placed on the spit. The continuous thread tying is carried out with a natural, artificial or synthetic rubber thread, covered spirally or with a plaiting machine. The difference in productivity is four to five times higher than production carried out manually. By hand, three to four chickens are prepared per minute, while by the machine according to the present invention a production of 18 to 20 chickens per minute is reached.

The objects, characteristics and advantages of the system and the automatic continuous thread machine for tying chickens however are still clearer and more evident from the following detailed description of some preferred embodiments, described however purely as an illustrative but not limiting example of the scope of the invention, and made with reference to the appended sheets of drawings, in which:
Figure 1 is a schematic top view showing the general structure of the machine and the overall system of tying the chickens in a figure of eight;
Figure 2 is a detailed perspective view of the tying unit 13 which in figure 1 is illustrated simply with a square flame, since it is necessary to show it in much greater detail given the number of operations it carries out;
Figure 3 is an elevation view of an alternative variation of the machine.

Now referring to the figures of the appended drawings, the structure of the machine is described together with the working cycle, which allows the structure and function of the individual elements to be considered better.

The chicken 1, after having been made available for tying, is placed on the belt 2, or other analogous transporter such as a chain, which has pushers of anatomic form 3 and 4, where 4 is fixed on a lever 5, hinged on the pivot 6, and all controlled by lever 7 which is put into movement by controls 8 (pneumatic, hydraulic, electromagnetic or mechanical, etc.)

While the belt 2 with pushers moves in the direction of the arrow, the pusher 3 moves the chicken 1 on towards the tying position and in its movement comes up against the elastic thread 17, positioned to be dragged along by the said chicken. Namely, the beginning of thread 17 is held inside a tying unit 13, in a manner which will be clear hereinafter, and thread 17, coming from spool 19 at the other side of belt 2 with respect to tying unit 13, is therefore held across belt 2 so that it curves around the right side of incoming chicken 1, going from underneath to above the chicken in the first half of the figure of 8, and then stops in the stop or tying position 16, which corresponds to between the centre of the chicken 1 and the centre of the braider 9. At this point, from the other side of the chicken, the fixed pusher 4 intervenes exerting a suitable pressure on the chicken, the two anatomic pushers 3 and 4 both pressing on the foreseen anatomic parts, raise the chicken breast and in this way present it with a pleasant aspect.

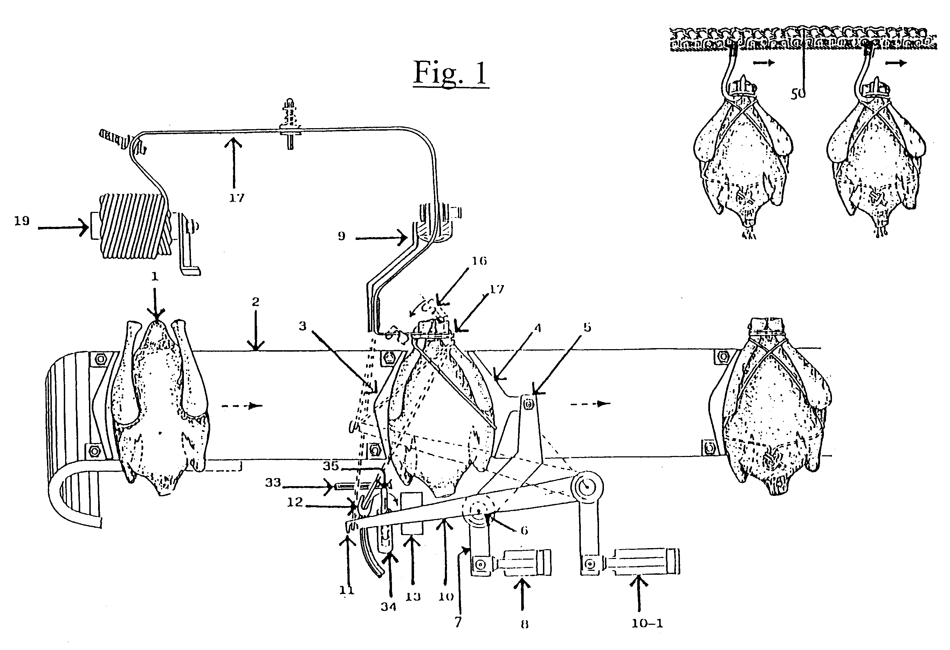

While proceeding with the operation and during this brief programmed stop, the braider 9 carries out one or more twists around the legs and coccyx, in order to tie them together with a moderate tension conserving the preformation given to the chicken. These are a few loops at the top of the figure of eight. Having finished the tying twists, a lever 10 driven by controls 10-1 draws the thread 17 from the position shown in solid, parallel to belt 2, and carries it to position 11 at the end position of lever 10 and at this point, where thread 17 is above chicken 1, as the dashed lines show, a hook 12 takes the thread 17 and sets it down gently on the support 33 and carries it to the tying unit 13, that is under the chicken where the beginning of thread 17 is still held, thus completing the figure of eight. (Fig. 1, right chicken). Here, tying unit 13 carries out the knot in a manner to be described hereinafter between the beginning and the end (still not cut) of the thread which has tied the chicken in a figure of eight, with one or more tying twists round the legs and coccyx; meanwhile thread 17 is cut, again in a manner to be described hereinafter, and the new leading end thereof is held inside tying unit 13, ready for the following product. Furthermore, the abovementioned tying, and especially one or more twists round the legs and coccyx, also serves to hook the chicken on the moving chain 50 and the vertical position which the hooked chicken assumes favours the evacuation of any liquid residues and for subsequent working operations.

The support 33, serves as a base to give the correct position to thread 17, in order that the tying unit 13 can carry out the knot at the initial end of the thread 17 and the part of the thread 17 which will be cut.

On the support 33, towards the tip, a niche 35 is made into which a small pin protruding from the shalt of small piston 34 is inserted.

The small pin has the function of holding the thread 17 in that precise position, until the tying unit 13 has carried out its knot, after which small piston 34 withdraws leaving thread 17 free which from that moment has become a ring tying the chicken in a figure of eight with one or more twists of the cord around the legs and coccyx.

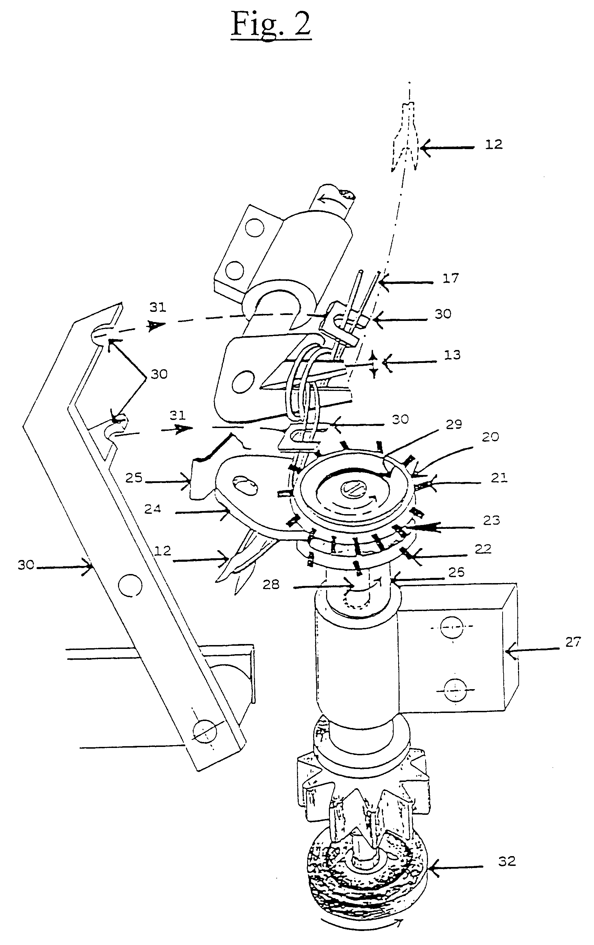

With reference to figure 2, one now describes the tying group 13 in detail which serves to make knots suitable to tie the chickens automatically.

The knot carried out by the tying unit is a common knot; however the way of taking the thread 17 to the tying unit 13 is unique. The continuos thread 17, that is the thread coming from spool 19, after having made the figure of eight around product 1 as already described in connection with fig. 1, is brought by small hook 12 to wheel 20, which is equipped on the outside with two rows of small pins 21 and 22, while at the centre of these two rows a concave groove 23 is made, where a convex block 24 rests, made of hardened material, held under pressure by a spring 25. Between the groove 23 and the block 24, the continuos thread 17 is dragged by the alternating movement of the wheel 20 with its pills 21 and 22 which introduce it into the groove 23 and under the block 24.

The spring 25, holding block 24 under pressure, clasps the thread 17 which is carried ahead and held in order that the tying unit 13 can make the conventional knot among the beginning of thread 17, already held in wheel 20 in the same manner as a result of tying former product, and the continuos part of thread 17 comprised between the thread part which has tied the product 1 and the one now being held in wheel 20. The knot is made securely, also if the thread has variations in diameter. The object of the groove 23 and of the block 24 pressed by the spring 25, is to increase the holding surfaces of the block 24 on the thread 17, blocked by the groove 23, in order that the hold on the thread 17 is valid also if the thread 17 varies in diameter. The wheel 20, having pins 21 , 22 and groove 23 on the outside is fixed oil a shaft 26. This shaft in turn, is sustained by support 27. The shalt 26 has a synchronous motion in phase with the chicken tying machine and the tying unit 13.

In the shaft 26 at the centre, a hole is made, on the inside of which there is another shaft 28 which is rotated separately at high velocity. At the top of the shaft 28 there is a circular cutting blade 29 which is utilized in the following way: when the tying unit 13 has carried out the knot, namely when the two cited parts of thread 17 have surrounded pliers-like member making a loop and are held between its jaws as shown in fig. 2, an extractor 30 in the form of a lever extracts it and moves it in the direction of the arrow 31 pushing the thread 17 against the circular blade 29 which cuts it, thus separating the thread 17 which has tied the chicken from that which will tie subsequently. The upper part of the lever 30, with the movement indicated by the arrow 31, serves to extract the external loop of the knot from the pliers-like member of tying unit 13, while the lower part of the said lever 30 serves to move the two threads 17 nearer to the rotating cutting blade 29.

The driving wheel 32 makes the shalt 28 rotate and thus the knife 29 which cuts the thread 17. Meanwhile, the two parts of thread 17 held between the jaws of pliers-like member, now become the trailing and leading end of the thread 17 which ties product 1, are drawn inside the loop thus completing the common knot. The new beginning of thread 17 is still held in wheel 20, ready for next chicken.

In essence, figure 1 shows the automatic machine and the continuous thread system as a whole for tying chickens from the placing of the chickens on the belt to the end with the chicken tied and ready to be taken away. It also has a transporting chain 50, where the chickens tied in a figure of eight are hung from hooks by the said tying.

Figure 2 represents the special tying unit 13, planned and constructed to carry out the synchronised functions, making part of the final tying and knotting cycle of said chickens.

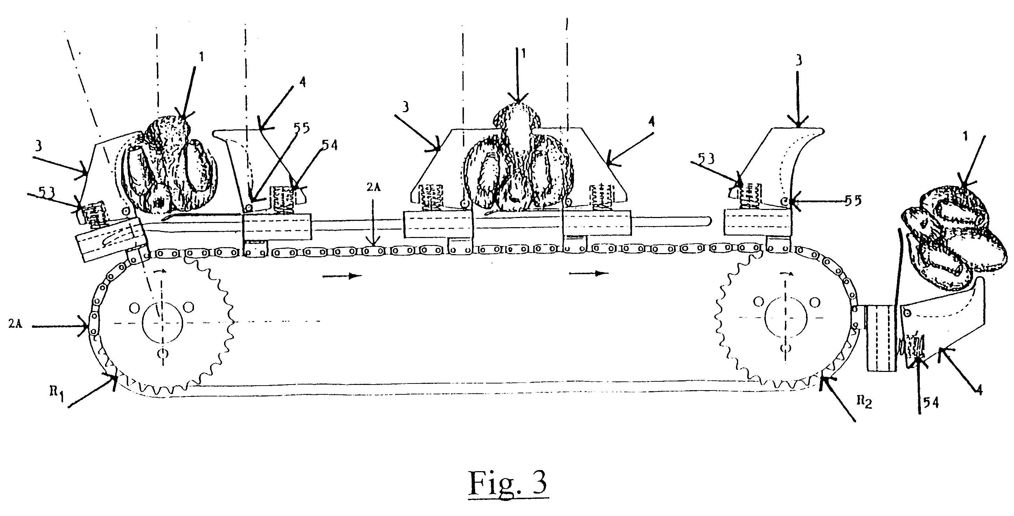

In Figure 3 a variation brought to the machine is shown which allows the automatic action of pushers 3 and 4 during the complete cycle, from the loading of the chicken 1 in the initial phase, to the pressing for the tying in the central zone and its release in the final zone at the end of the cycle, this variation has allowed the elimination of the pressure group, constituted by lever 5, 6 and piston 8.

In fact, the pushers 3 and 4 are fixed to a transport chain 2A and close at the beginning of the cycle, pressing the chicken 1 with the movement of the chain 2A in the curvature of the wheel R1 and opening automatically with the movement of said chain in the curvature of the wheel R2 towards the end of the cycle due to the variable angle that the pusher 4 assumes with respect to the horizontal plane.

One notes that, initially, the distance between the pusher 3 and pusher 4 is so wide that it allows the chicken 1 to be introduced.

As the chain 2A moves, pusher 3, moving up the curvature of wheel R1, is positioned horizontally and approaches pusher 4, so that the chicken 1 is automatically pressed. The variation of the distance at the upper edges of pushers 3 and 4 is due to the angle which the axis of the pusher 3 makes with respect to the vertical straight line on the displacement plane. When this angle reaches zero, the distance between the two pushers 3 and 4 is reduced to a minimum, so that the chicken 1 is pressed automatically. Having reached the central station of the cycle, chicken 1 is tied to binder 13. Towards the end of the cycle, pusher 3 is above the vertical of the wheel R2 and pusher 4 is found completely open so that the chicken 1, already tied is ready to be unloaded.

In Figure 3 other important improvements can be noted which are described hereinbelow.

When the two pushers arrive in the loading position on the wheel R 1, or in other words, when pusher 3 is still in the position before the vertical one and open, the chicken is introduced.

Continuing the cycle, the chicken 1, pushed by the pusher 3 reaches a vertical line passing through the center of the wheel R1, pressing the chicken against pusher 4 and is positioned parallel to this, loading the springs 53 and 54 which equilibrate, contemporaneously exerting pressure on chicken 1. Given that the springs 53 and 54 spread the two pushers 3 and 4 apart they enable the pushers to allow chickens of different sizes to be held. The pressure, exerted by the two pushers 3 and 4, keep the chicken compact and immobile in the correct position for tying with binder 13, as indicated in the central tying position. This automatic action shown in figure 3 is made possible by the use of a chain 2A made up of links in the place of a conveyor belt.

The controls of the various mechanisms of the machine in question could still be realised with pneumatic, hydraulic, electromagnetic, mechanical or any other suitable system but it is decidedly preferable and advisable to employ exclusively pneumatic controls with dry air, in order to avoid any negative influence of notable humidity occuring in the environments where such machines have to be installed.

Although in this report the tying of chickens has always been described, it is evident that the same system and the same machine can be employed for any other poultry products, such as guinea fowl, turkeys, quails, pheasants, ducks and so on, as well as for any other food product which necessitates this kind of tying.

Experts of the art will easily recognise the many applications and the notable advantages of such an automatic tying machine, and one must realise that numerous variations, additions, modifications and/or substitutions of elements can be made to the invention and to the system, without with this departingfrom the scope of protection, as it is recited in the appended claims.

## Claims

1. Continuous thread system for tying poultry products tied in a figure 8 with one or more twists around the legs and the coccyx with a thread (17) of natural, artificial or synthetic rubber, which is covered with a thread of natural, artificial or synthetic material and or natural, artificial or synthetic cord, comprising in combination a means of transport of said products to which anatomic pushers (3, 4) are fixed which push the product (1) to a tying position (16), a rotating binder (9) carrying thread (17) which carries out one or more twists of the tying thread (17), a tying unit (13) to effect a common knot at the ends of thread (17) and a thread cutting unit (29, 30), said tying unit (13) comprising locating means (10, 12, 20, 24, 33) to locate and hold thread (17) near the end of thread (17) and a pliers-like member, thread (17) forming a loop around said pliers-like member and being held between its jaws in such a way that, alter operation of said thread cutting unit (29, 30), the ends of thread (17) are drawn inside the loop thus forming the knot.

2. Machine according to claim 1, characterised in that the anatomic pushers are constituted by a pusher (3) fixed on the transport means which pushes the poultry product towards the tying position and by a mobile pusher (4) driven by a lever (5), which in the tying position intervenes from the other side to press and preform the poultry product (1) to prepare it for tying.

3. Machine according to claim 2, characterized in that the binder (9) carries out the tying twists around the poultry product while it is in the tying position (16).

4. Machine according to claim 3 characterized in that said locating means (10, 12, 20, 24, 33) comprises a thread drawing lever (10) and an organ (12) in the form of a reaping hook, said lever (10) withdrawing thread (17) after the tying twists carried out by said binder (9) and said organ (12) taking it to said tying unit (13).

5. Machine according to claim 4 characterized in that said locating means (10, 12, 20, 24, 33) further comprises a thread support (33) having a niche (35) into which a little pin of the stem of a small piston (34) is threaded in order to hold thread (17) during operation of said tying unit (13).

6. Machine according to claim 5 characterized in that said locating means (10, 12, 20, 24, 33) further comprises a wheel (20) having two rows of pins (21, 22) at the center of which is a concave groove (23) against which a convex block (24) rests, held by a spring (25) under pressure, whereby thread (17) is dragged by pills (21, 22) within groove (23) where it is held firm by block (24) during operation of said tying unit (13).

7. Machine according to claim 6 characterized in that said thread cutting unit (29, 30) is constituted by a rotating blade (29) and a lever (30) which in its movement moves thread (17) towards said rotating blade (29) to cut it and at the same time extracts said loop of the thread (17) from around said pliers-like member of tying unit (13), allowing the leading and trailing ends of thread (17) just cut to be drawn inside the loop, thus cooperating to operation of said tying unit (13).

8. Machine according to the preceding clams, characterized in that the transporting means is constituted by a chain (2A) made up of links to which pairs of pushers (3, 4) are fixed at pre-set distances, said pushers having an angle of aperture during their passage on the toothed transmission wheels (R1, R2) and thus in the loading and unloading phases, such as to allow the pressing, tying and automatic release of the chicken (1), so as to dispense with the chicken pressure group.

9. Machine according to claim 8, characterized in that the pushers (3, 4) are hinged to the links of the chain (2A) and have springs (53, 54) which allow the pushers to be spread apart to allow chickens (1) of different sizes to be held.

## Patentansprüche

1. Endlosfadensystem zum Zusammenbinden von Geflügelprodukten, die in Form einer 8 mit einer oder mehreren Windung(en) um die Beine und das Steißbein mit einem Faden (17) aus natürlichem, künstlichem oder synthetischem Gummi zusammengebunden werden, der mit einem Faden aus natürlichem, künstlichem oder synthetischem Material oder mit einer natürlichen, künstlichen oder synthetischen Schnur umgeben ist, enthaltend in Kombination Transporteinrichtungen für die Produkte, an denen anatomische Schieber (3, 4) angebracht sind die das Produkt (1) zu einer Bindeposition (16) schieben, eine rotierende, den Faden (17) befördernde Bindeeinrichtung (9), die eine oder mehrere Windung(en) des Bindefadens (17) ausführt, eine Bindeeinheit 13 zum Bewirken eines üblichen Knotens an den Enden des Fadens (17), und eine Fadenabschneideeinheit (29, 30), welche Bindeeinheit (13) Anordnungseinrichtungen (10, 12 20, 24 33), um den Faden (17) nahe dem Ende des Fadens (17) anzuordnen und zu halten, und ein zangenähnliches Element enthält, wobei der Faden (17) eine Schleife um das zangenähnliche Element herum bildet und zwischen seinen Klauen in einer solchen Weise gehalten wird; daß die Enden des Fadens (17) nach Betätigung der Fadenabschneideeinheit (29, 30) nach innerhalb der Schleife gezogen werden, wodurch sie den Knoten bilden.

2. Maschine nach Anspruch 1,
dadurch gekennzeichnet,
daß die anatomischen Schieber durch einen an den Transporteinrichtungen angebrachten Schieber (3), der das Geflügelprodukt zur Bindeposition hin schiebt, und einen mobilen, von einem Hebel (5) angetriebenen Schieber (4) gebildet werden, der in der Bindeposition von der anderen Seite eingreift, um das Geflügelprodukt (1) Zu seiner Vorbereitung zum Zusammenbinden drückt und vorformt.

3. Maschine nach Anspruch 2,
dadurch gekennzeichnet,
daß die Bindeeinrichtungen (9) die Zusammenbindewindungen um das Geflügelprodukt herum ausführt, während es in der Bindeposition (16) ist.

4. Maschine nach Anspruch 3,
dadurch gekennzeichnet,
daß die Anordnungseinrichtungen (10, 12, 20, 24, 33) einen Fadenzughebel (10) und ein Organ (12) in der Form einer Sichel enthalten, welcher Hebel (10) den Faden (17) zurückzieht, nachdem die Zusammenbindewindungen von den Bindeeinrichtungen (9) ausgeführt wurden, und weiches Organ ihn zur Bindeeinheit (13) bringt.

5. Maschine nach Anspruch 4,
dadurch gekennzeichnet,
daß die Anordnungseinrichtungen (10, 12, 20, 24, 33) ferner eine Fadenhalterung (33) enthalten, die eine Nische (35) hat, in welche in kleiner Stift der Stange eines kleinen Kolbens (34) eingeschraubt ist, um den Faden (17) während der Operation dar Bindeeinheit (13) zu halten.

6. Maschine nach Anspruch 5,
dadurch gekennzeichnet,
daß die Anordnungseinrichtungen (10, 12, 20, 24, 33) ferner ein Rad (20) mit zwei Reihen von Stiften (21, 22) enthalten, in dessen Mitte eine konkave Nut (23) ist, gegen welche sich ein konvexer Block (25) anlegt, der von einer Feder (25) unter Druck gehalten wird, wodurch der Faden (17) durch die Stifte (21, 22) nach innerhalb der Nut (23) gezogen wird, wo er durch den Block (24) während der Operation der Bindeeinheit (13) fest gehalten wird.

7. Maschine nach Anspruch 6,
dadurch gekennzeichnet,
daß die Abschneideeinheit (29, 30) durch eine rotierende Klinge (29) und einen Hebel (30) gebildet ist, der in seiner Bewegung den Faden (17) zu der rotierenden Klinge (29) hin bewegt, um ihn abzuschneiden, und gleichzeitig die Schleife des Fadens (17) aus der Umgebung des zangenähnlichen Elements der Bindeeinheit (13) herauszieht, wodurch es den führenden und abschließenden Enden des Fadens (17), das gerade abgeschnitten wurde, gestattet wird, nach innerhalb der Schleife gezogen zu werden, wodurch sie zur Operation der Bindeeinheit (13) zusammenwirken.

8. Maschine nach einem der vorhergehenden Ansprüche,
dadurch gekennzeichnet,
daß die Transporteinrichtungen durch eine Kette (2A) gebildet sind, die aus Verbindungsgliedern besteht, an denen Paare von Schiebern (3, 4) in voreingestellten Abständen angebracht sind, welche Schieber während ihres Durchgangs an den gezahnten Übertragungsrädern (R1, R2) und somit den Belade- und Entladephasen einen Öffnungswinkel haben, um das Zusammendrücken, Zusammenbinden und Freigeben des Huhns (1) zu gestatten, um bei der Huhn-Druckgruppe auszugehen.

9. Maschine nach Anspruch 8,
dadurch gekennzeichnet,
daß die Schieber (3, 4) an den Verbindungsgliedern der Kette (2A) angelenkt sind und Federn (53, 54) haben, die es den Schiebern gestatten, auseinandergedrückt zu werden, um es Hühnern (1) verschiedener Größen zu gestatten, gehalten zu werden.

## Revendications

1. Système de ficelage continu de volailles dans une configuration en "8" avec un ou plusieurs tours autour des pattes et du croupion par une ficelle (17) de caoutchouc naturel, artificiel ou synthétique recouverte d'un fil ou d'une gaine naturelle, artificielle ou synthétique comprenant, en combinaison, un moyen de transport desdites volailles sur lequel sont fixés des poussoirs (3, 4) anatomiques, lesdits poussoirs poussant les volailles dans une position de ficelage (16), un lieur rotatif (9) portant la ficelle (17) qui effectue un ou plusieurs tour de ficelage et une unité de coupe (29 ,30), ladite unité de ficelage (13) comprenant des moyens de positionnement (10, 12, 20, 24, 33) pour positionner et maintenir la ficelle (17) au voisinage de son extrémité et un organe plieur, la ficelle (17) formant une boucle autour de l'organe plieur en étant tenue entre ses dents de sorte que, après l'opération de l'unité de coupe (29, 30), les extrémités de la ficelle (17) soient tirées à l'intérieur de la boucle pour former le noeud.

2. Machine selon la revendication 1, caractérisée en ce que les poussoirs anatomiques sont constitués par un poussoir (3) fixé sur le moyen de transport qui pousse les volailles vers leur position de ficelage et par un poussoir mobile (4) entraîné par un levier (5) qui, dans la position de ficelage, intervient à partir du côté opposé pour préformer la volaille (1) et la préparer pour le ficelage.

3. Machine selon la revendication 1, caractérisée en ce que le lieur (9) effectue les tours de ficelage autour de la volaille lorsqu'il est en position (16) de ficelage.

4. Machine selon la revendication 3, caractérisée lesdits moyens de positionnement (10, 12, 20, 24, 33) comprennent un levier (10) de tirage de la ficelle et un organe (12) en forme de faucille, ledit levier (10) retirant la ficelle (17) après que les tours de ficelage aient été effectués par ledit lieur (9), ledit organe (12) l'emmenant sur ladite unité de ficelage.

5. Machine selon la revendication 4, caractérisée en ce que lesdits moyens de positionnement (10, 12, 20, 24, 33) comprennent de plus, un support de ficelle (33) ayant une niche dans laquelle une petite broche de tige d'un petit piston (34) est enfilée en vue de maintenir la ficelle (17) durant l'opération de ladite unité de ficelage (13).

6. Machine selon la revendication 5, caractérisée en ce que lesdits moyens de positionnement (10, 12, 20, 24, 33) comprennent de plus, une roue (20) ayant deux rangées de broches (21, 22), au centre desquelles se trouve une rainure concave (23), contre laquelle repose un bloc convexe (24), maintenu sous pression par un ressort (25), de sorte que la ficelle soit tirée par les broches (21 ,22) à l'intérieur de la rainure (23) où elle est fermement maintenue par le bloc (24) durant l'opération de ladite unité de ficelage (13).

7. Machine selon la revendication 6, caractérisée en ce que ladite unité de coupe (29 ,30) est constituée par une lame rotative (29) et un levier (30) qui, dans son mouvement déplace la ficelle vers la lame rotative (29) pour la couper et, en même temps, extrait ladite boucle de ficelle (17) des organes plieurs de l'unité de ficelage (13) permettant, aux extrémités avant et arrière de la ficelle (17) venant d'être coupées, d'être tirées à l'intérieur de la boucle coopérant ainsi à l'opération de l'unité de ficelage (13).

8. Machine selon les revendications précédentes, caractérisée en ce que le moyen de transport est constitué par une chaîne (2A) faite de maillons auxquels est fixée de poussoirs (3, 4) à des distances prédéterminées, lesdits poussoirs ayant un angle d'ouverture durant leur passage sur les roues dentées de transmission (R1, R2) et ainsi, durant les phases de chargement ou de déchargement, permettent la pression, le ficelage et le relâchement automatique des volailles (1), de manière à les distribuer au groupe de pression des volailles.

9. Machine selon la revendication 8, caractérisée en ce que les poussoirs (3, 4) sont articulés sur les maillons de la chaîne (2A) et sont munis de ressorts (53, 54) permettant aux poussoirs de s'étendre indépendamment pour permettre le maintien des volailles (1) de différentes tailles.
